(19) Europäisches Patentamt
European Patent Office
Office européen des brevets

(11) **EP 3 828 698 B1**

(12) **EUROPEAN PATENT SPECIFICATION**

(45) Date of publication and mention of the grant of the patent:
**20.07.2022 Bulletin 2022/29**

(21) Application number: **20217332.4**

(22) Date of filing: **01.04.2020**

(51) International Patent Classification (IPC):
*G06F 9/38* (2018.01)   *G06F 9/30* (2018.01)

(52) Cooperative Patent Classification (CPC):
**G06F 9/30043; G06F 9/30036; G06F 9/30076; G06F 9/3016; G06F 9/30192**

(54) **DATA PROCESSING METHOD AND APPARATUS, AND RELATED PRODUCT**

DATENVERARBEITUNGSVERFAHREN UND -VORRICHTUNG UND ZUGEHÖRIGES PRODUKT

PROCÉDÉ ET APPAREIL DE TRAITEMENT DE DONNÉES, ET PRODUIT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2019 CN 201910272411**
**04.04.2019 CN 201910272625**
**04.04.2019 CN 201910272660**
**19.04.2019 CN 201910320091**
**19.04.2019 CN 201910319165**
**25.04.2019 CN 201910340177**
**25.04.2019 CN 201910341003**

(43) Date of publication of application:
**02.06.2021 Bulletin 2021/22**

(62) Document number(s) of the earlier application(s) in accordance with Art. 76 EPC:
**20783678.4 / 3 800 547**

(73) Proprietor: **Cambricon Technologies Corporation Limited**
**Beijing 100191 (CN)**

(72) Inventors:
• **LIU, Shaoli**
**Beijing 100190 (CN)**
• **WANG, Bingrui**
**Beijing 100190 (CN)**
• **WU, Jianhua**
**Beijing 100191 (CN)**
• **HAO, Yongzheng**
**Beijing 100191 (CN)**
• **LIANG, Jun**
**Beijing 100191 (CN)**

(74) Representative: **Huang, Liwei**
**Cäcilienstraße 12**
**40597 Düsseldorf (DE)**

(56) References cited:
**WO-A1-2018/217360    US-A1- 2011 161 625**
**US-B1- 6 192 384**

**Description**

**Technical Field**

The disclosure relates generally to the field of computer technologies, and more specifically to a data processing method and an apparatus and related products.

**Background**

With the continuous development of the AI (Artificial Intelligence) technology, it has gradually obtained wide application and worked well in the fields of image recognition, speech recognition, and natural language processing, and the like. However, as the complexity of AI algorithms is growing, the amount of data and data dimensions that need to be processed are increasing. In related arts, processors usually determine the data address by obtaining parameters of instructions, and then read and use the data according to the data address, which requires those skilled in the art to set relevant parameters for data access (such as the relationship between data and data, or data dimension and data dimension, *etc.)* when designing parameters, so as to generate instructions and transmit the instructions to the processors to complete the data access. The above-mentioned method reduces the processing efficiency of the processors. WO2018/217360 discloses a data processing method including executing an instruction according to the identifier of a descriptor, which is included as an operand in the instruction.

**Summary**

In order to solve the technical problems, the present disclosure provides a data processing technical solution.

A first aspect of the present disclosure provides a data processing method including: when an operand of a decoded first processing instruction includes an identifier of a descriptor, obtaining content of the descriptor according to the identifier of the descriptor, where the descriptor is configured to indicate a shape of a tensor; and executing the first processing instruction according to the content of the descriptor.

A second aspect of the present disclosure provides a data processing apparatus including: a content obtaining module configured to, when an operand of a decoded first processing instruction includes the identifier of the descriptor, obtain content of a descriptor according to an identifier of the descriptor, where the descriptor is configured to indicate a shape of a tensor; and an instruction executing module configured to execute the first processing instruction according to the content of the descriptor.

A third aspect of the present disclosure provides a neural network chip including the data processing apparatus.

A fourth aspect of the present disclosure provides an electronic device including the neural network chip.

A fifth aspect of the present disclosure provides a board card including: a storage device, an interface apparatus, a control device, and the above-mentioned neural network chip. The neural network chip is connected to the storage device, the control device, and the interface apparatus respectively; the storage device is configured to store data; the interface apparatus is configured to implement data transmission between the neural network chip and an external apparatus; and the control device is configured to monitor a state of the neural network chip.

According to embodiments of the present disclosure, by introducing a descriptor indicating the shape of a tensor, the corresponding content of the descriptor can be determined when the identifier of the descriptor is included in the operand of a decoded processing instruction, and the processing instruction can be executed according to the content of the descriptor, which can reduce the complexity of data access and improve the efficiency of data access.

In order to make other features and aspects of the present disclosure clearer, a detailed description of exemplary embodiments with reference to the drawings is provided below.

**Brief Description of the Drawings**

The accompanying drawings contained in and forming part of the specification together with the specification show exemplary embodiments, features and aspects of the present disclosure and are used to explain the principles of the disclosure.

Fig. 1 shows a flowchart of a data processing method according to an embodiment of the present disclosure.
Fig. 2 shows a schematic diagram of a data storage space of a data processing method according to an embodiment of the present disclosure.
Fig. 3 shows a block diagram of a data processing apparatus according to an embodiment of the present disclosure.

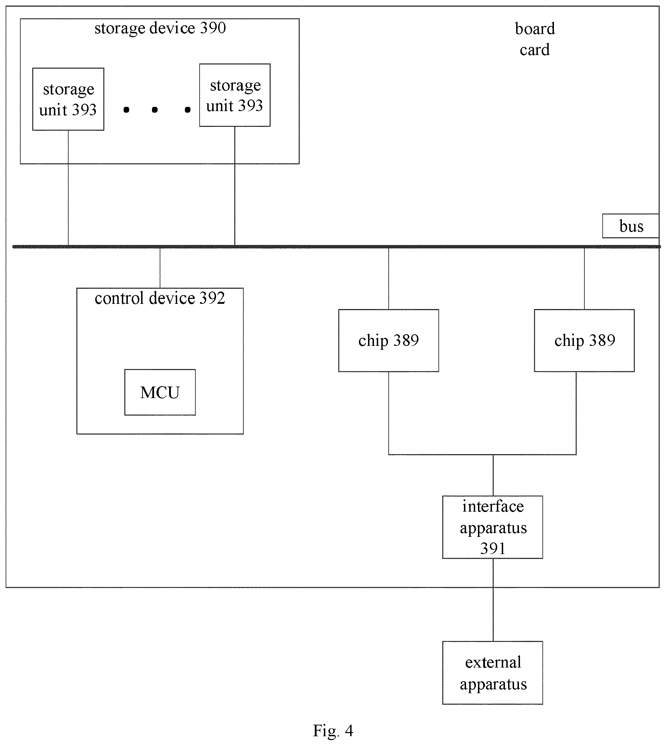

Fig. 4 shows a block diagram of a board card according to an embodiment of the present disclosure.

## Detailed Description of the Embodiments

Various exemplary embodiments, features, and aspects of the present disclosure will be described in detail below with reference to the drawings. The same marks in the drawings represent the same or similar elements. Although various aspects of the embodiments are shown in the drawings, the drawings are not necessarily drawn to scale unless specifically noted.

The "exemplary" as used herein means "serving as an example, embodiment, or illustration." Any embodiment described herein as "exemplary" is not necessarily to be interpreted as superior to or better than other embodiments.

In addition, in order to better illustrate the present disclosure, a lot of specific details are given in the detailed description below. Those skilled in the art should understand that the present disclosure can be implemented without certain specific details. In some embodiments, methods, means, components, and circuits that are well known to those skilled in the art have not been described in detail in order to highlight the main idea of the present disclosure.

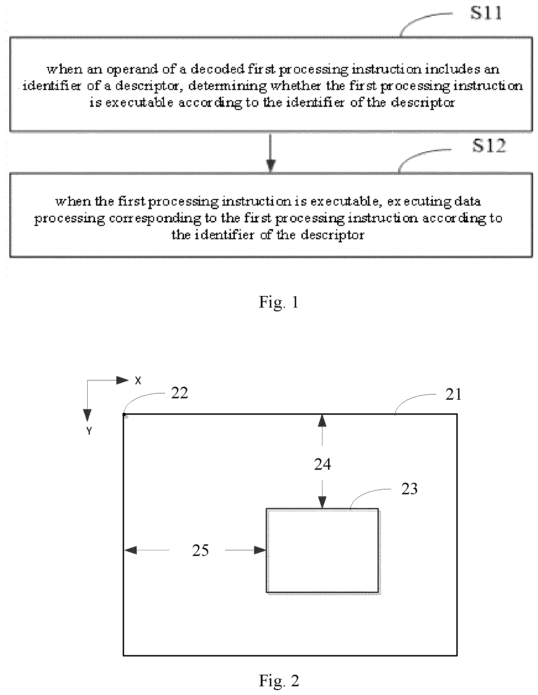

According to an embodiment of the present disclosure, a data processing method is provided. Fig. 1 shows a flowchart of a data processing method according to an embodiment of the present disclosure. As shown in Fig. 1, the data processing method includes:

in a step S11, when an operand of a decoded first processing instruction includes an identifier of a descriptor, determining whether the first processing instruction is executable according to the identifier of the descriptor, where the descriptor is used to indicate a shape of a tensor; and

a step S12, when the first processing instruction is executable, executing data processing corresponding to the first processing instruction according to the identifier of the descriptor.

In a possible implementation method, the data processing method may be applied to a processor, where the processor may include a general-purpose processor (such as a CPU (central processing unit), a GPU (graphics processor)) and a dedicated processor (such as an AI processor, a scientific computing processor, or a digital signal processing, *etc.).* This disclosure does not limit the type of the processor.

In a possible implementation method, the decoded first processing instruction includes an operation code and one or more operands, where the operation code is used to indicate a processing type corresponding to the first processing instruction. The first processing instruction may include a data access instruction, an operation instruction, a descriptor management instruction, a synchronization communication instruction, and/or the like. The present disclosure does not limit the specific type of the first processing instruction.

In a possible implementation method, data to be processed may include N-dimensional tensor data (N is an integer greater than or equal to 0, for example, N=1, 2, or 3), where the tensor may have various forms of data composition, and the tensor may have different dimensions. For example, a scalar can be viewed as a 0-dimensional tensor, a vector can be viewed as a 1-dimensional tensor, and a matrix can be a tensor of two or more dimensions. The shape of a tensor includes dimensions of the tensor and a size of each dimension of each tensor and the like. For example, for a tensor:

$$\begin{bmatrix} 1 & 2 & 3 & 4 \\ 11 & 22 & 33 & 44 \end{bmatrix},$$

the shape of the tensor can be described by the descriptor as (2, 4), in other words, the tensor is a 2-dimensional tensor represented by two parameters, and a size of a first dimension (column) of the tensor is 2, a size of a second dimension (row) of the tensor is 4. It should be noted that the present disclosure does not limit the manner in which the descriptor indicates the shape of the tensor. When tensor data is stored in a memory, the shape of the tensor data cannot be determined according to a data address (or storage area) of the tensor, and then related information such as the relationship between a plurality of pieces of tensor data cannot be determined, as a result, the processor is inefficient in accessing tensor data.

In a possible implementation method, the descriptor can be used to indicate the shape of N-dimensional tensor data, where N is an integer greater than or equal to 0, and the value of N can be determined according to a count of dimensions (orders) of the tensor data, and can also be set according to the usage of the tensor data. For example, when the value of N is 3, the tensor data is 3-dimensional tensor data, and the descriptor can be used to indicate the shape (such as offset, size, *etc.)* of the tensor data in three dimensions. It should be understood that those skilled in the art can set the value of N according to actual needs, which is not limited in the present disclosure.

In a possible implementation method, the descriptor may include the identifier and the content, and the identifier of the descriptor may be used to distinguish the descriptor, for example, the identifier may be used to number the descriptor; and the content of the descriptor may include at least one shape parameter (such as a size of each dimension of the tensor, *etc.)* representing the shape of the tensor data, and may also include at least one address parameter (such as a base address of a datum point) representing an address of the tensor data. The present disclosure does not limit the specific parameters included in the content of the descriptor.

In a possible implementation method, the identifier and content of the descriptor can be stored in a descriptor storage space, which may be a storage space in an internal memory of a control unit (such as a register, an on-chip SRAM, or other medium cache, etc.). The data storage space of the tensor data indicated by the descriptor may be a storage space in an internal memory of the control unit (*e.g.*, an on-chip cache) or a storage space in an external memory (an off-chip memory) connected to the control unit. The data address in the data storage space may be an actual physical address or a virtual address. The present disclosure does not limit a position of the descriptor storage space and a position of the data storage space, and the type of the data address.

In a possible implementation method, the identifier and content of the descriptor and the tensor data indicated by the descriptor can be located in a same area. For example, a continuous area of an on-chip cache can be used to store the related content of the descriptor, where an address of the area is ADDR0-ADDR1023. An address ADDR0-ADDR31 can be used to store the identifier of the descriptor, an address ADDR32-ADDR63 can be used to store the content of the descriptor, and an address ADDR64-ADDR1023 can be used to store the tensor data indicated by the descriptor. The address ADDR is not limited to 1 bit or 1 byte, and the ADDR is an address thereof according to actual situations, which is not limited in the present disclosure. Those skilled in the art can determine the storage area and the address thereof according to actual situations, which is not limited in the present disclosure.

In a possible implementation method, the identifier, content of the descriptor and the tensor data indicated by the descriptor can be stored separately in different areas of an internal memory. For example, a register may be used as a descriptor storage space to store the identifier and content of the descriptor, and an on-chip cache may be used as a data storage space to store the tensor data indicated by the descriptor.

In a possible implementation method, a special register (SR) may be provided for the descriptor, where the data in the descriptor may be immediate data or can be obtained from the special register. When the register is used to store the identifier and content of the descriptor, a serial number of the register can be used to indicate the identifier of the descriptor. For example, if the serial number of the register is 0, the identifier of the stored descriptor is 0. When the descriptor in the register is valid, an area can be allocated in a caching space (such as creating a tensor caching unit for each tensor data in the cache) according to the size of the tensor data indicated by the descriptor for storing the tensor data. It should be understood that a preset caching space may be also used to store the tensor data, which is not limited in the present disclosure.

In a possible implementation method, the identifier and content of the descriptor can be stored in an internal memory, and the tensor data indicated by the descriptor can be stored in an external memory. For example, on-chip storage of the identifier and content of the descriptor and off-chip storage of the tensor data indicated by the descriptor may be adopted.

In a possible implementation method, the data address of the data storage space corresponding to the descriptor may be a fixed address. For example, a separate data storage space may be provided for the tensor data, and a start address of each tensor data in the data storage space corresponds to the identifier of the descriptor. In this case, according to the content of the descriptor, the control unit may determine the data address of the data corresponding to the operand through a tensor control module, and then the control unit executes the first processing instruction.

In a possible implementation method, when the data address of the data storage space corresponding to the identifier of the descriptor is a variable address, the descriptor may be also used to indicate the address of N-dimensional tensor data, where the content of the descriptor may further include at least one address parameter representing the address of the tensor data. For example, if the tensor data is a 3-dimenisonal data, when the descriptor points to the address of the tensor data, the content of the descriptor may include an address parameter indicating the address of the tensor data, such as a start address of the tensor data; or the content of the descriptor may include a plurality of address parameters of the address of the tensor data, such as a start address + address offset of the tensor data, or address parameters of the tensor data in each dimension. Those skilled in the art can set the address parameters according to actual needs, which is not limited in the present disclosure.

In a possible implementation method, the address parameter of the tensor data includes a base address of the datum point of the descriptor in the data storage space, where the base address may be different according to the change of the datum point. The present disclosure does not limit the selection of the datum point.

In a possible implementation method, the base address may include a start address of the data storage space. When the datum point of the descriptor is a first data block of the data storage space, the base address of the descriptor is the start address of the data storage space. When the datum point of the descriptor is other data than the first data block in the data storage space, the base address of the descriptor is the physical address of the data block in the data storage space.

In a possible implementation method, the shape parameter of the tensor data includes at least one of the followings: a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor. For example, if the tensor data is a 3-dimensional data, the descriptor can use a coordinate (x, y, z) to represent the shape of the tensor data, and the data description position of the tensor data can be represented by the coordinate (x, y , z), and the data description position of the tensor data may be a position of a point or an area where the tensor data is mapped in a 3-dimensional space.

It should be understood that those skilled in the art may select a shape parameter representing tensor data according to actual conditions, which is not limited in the present disclosure.

In a possible implementation method, in the step S11, when the operand of the decoded first processing instruction includes the identifier of the descriptor, it is determined whether the first processing instruction is executable according to the identifier of the descriptor. Whether the identifiers of the descriptors are the same may indicate whether pieces of tensor data indicated by the descriptors are the same. Compared with the storage address of the data, the identifier of the descriptor is simpler, therefore, the process of determining whether there is a pre-order instruction that also operates this descriptor through the identifier of the descriptor is simpler and more efficient than the process of determining whether there is a pre-order instruction through the storage address of the data, where the pre-order instruction may be a processing instruction that has a dependency relationship with the first processing instruction.

In a possible implementation method, whether the first processing instruction is executable may be determined according to the identifier of the descriptor and the preset execution conditions. For example, when a register is used to store the identifier of the descriptor, each register stores a descriptor identifier, and a plurality of instructions accessing a same register can be executed in the order in which the instructions are submitted, therefore, it can be determined whether all the instructions that access the same register prior to the first processing instruction in the instruction queue have been completed; and after all the instructions accessing the same register are executed, it is determined that the first processing instruction is executable. The preset execution conditions may include that a required descriptor is registered first, and the descriptor cannot be released after being used. The present disclosure does not limit the preset execution conditions.

In a possible implementation method, the step S11 may include: according to the identifier of the descriptor, determining whether there is a second processing instruction that has not been executed completely, where the second processing instruction includes a processing instruction that is prior to the first processing instruction in the instruction queue and has the identifier of the descriptor in the operand thereof; and when there is no second processing instruction, determining that the first processing instruction is executable.

In other words, when the operand of the first processing instruction includes the identifier of the descriptor, it can be determined whether there is a second processing instruction that is prior to the first processing instruction in the instruction queue and has the identifier of the descriptor in the operand thereof according to the identifier of the descriptor, and the found second processing instruction is used as a processing instruction having a dependency relationship with the first processing instruction. In the case where the operand of the first processing instruction has identifiers of a plurality of descriptors, the dependency relationship corresponding to each descriptor can be determined respectively, in other words, a pre-instruction corresponding to the identifier of at least one of the a plurality of descriptors in the operand is taken as the second processing instruction having a dependency relationship with the first processing instruction.

When there is a second processing instruction that has not been executed completely, the first processing instruction is not executable; when there is no second processing instruction, the first processing instruction is executable.

For example, when the operand of the first processing instruction includes the identifier of at least one descriptor, and when whether there is a second processing instruction that has not been executed completely is determined, the identifiers of all the descriptors included in the operand can be determined, where when there is an identifier of at least one descriptor in the operand of the first processing instruction is the same as an identifier of a descriptor in the operand of the second processing instruction, the first processing instruction has a dependency relationship with the second processing instruction. When the second processing instruction has not been executed completely, the first processing instruction cannot be executed.

For example, when the first processing instruction is ADD, TRIO, TR11, and TR12, and the second processing instruction is ADD, TRIO, TR11, and TR12, the identifiers of the descriptors in the operand of the first processing instruction are the same as the identifiers of the descriptors in the operand of the second operation instruction, then the first processing instruction has a dependency relationship with the second processing instruction. When the second processing instruction has not been executed completely, the first processing instruction cannot be executed.

When the first processing instruction is ADD, TRIO, TR11, and TR13, and the second processing instruction is ADD, TRIO, TR11, and TR12, two identifiers (TRIO and TR11) of the descriptors in the operand of the first processing instruction are the same as two identifiers (TRIO and TR11) of the descriptors in the operand of the second operation instruction, then the first processing instruction has a dependency relationship with the second processing instruction. When the second processing instruction has not been executed completely, the first processing instruction cannot be executed.

When the first processing instruction is ADD, TRIO, TR12, and TR13, and the second processing instruction is ADD, TRIO, TR14, and TR15, one identifier (TRIO) of the descriptor in the operand of the first processing instruction is the same as the identifier (TRIO) of the descriptor in the operand of the second operation instruction, then the first processing instruction has a dependency relationship with the second processing instruction. When the second processing instruction has not been executed completely, the first processing instruction cannot be executed.

When the first processing instruction is ADD, TRIO, TR11, and TR12, and the second processing instruction is ADD, TR13, TR14, and TR15, the identifiers of the descriptors in the operands of the first processing instruction and the second operation instruction are completely different, then there is no dependency between the first processing instruction and the second processing instruction. When the second processing instruction has not been executed completely, the first processing instruction can be executed.

When the first processing instruction is SUM and TRIO, and the second processing instruction is SUM and TRIO, the identifiers of the descriptors in the operand of the first processing instruction are the same as the identifiers of the descriptors in the operand of the second operation instruction, then the first processing instruction has a dependency relationship with the second processing instruction. When the second processing instruction has not been executed completely, the first processing instruction cannot be executed.

In this way, whether an instruction is executable may be determined directly according to the identifier of the descriptor, it is no need to obtain the base address and operation range of the operand involved in the instruction more than once, and the data address and operation range of the operand in the instruction may be obtained by computing, which may reduce the complexity of the processor in determining whether the instruction is executable, simplify the analysis process of the data address of the operand in the instruction, and improve the execution efficiency of the processor.

In a possible implementation method, at least one of the first processing instruction and the second processing instruction includes a writing operation for the descriptor.

For example, the first processing instruction is a reading instruction for the descriptor TR2, and the second processing instruction is also a reading instruction for the descriptor TR2, in other words, neither the first processing instruction nor the second processing instruction includes a writing operation for the descriptor TR2, then the first processing instruction is executable. If the second processing instruction is a writing instruction for the descriptor TR2, when the second processing instruction has not been executed completely, the first processing instruction cannot be executed.

In this way, a descriptor may be operated by a plurality of instructions at the same time, which may improve the execution efficiency of instructions in parallel, thereby improving the processing efficiency of the processor.

In a possible implementation method, the operand of the first processing instruction may include an identifier of at least one descriptor. The step S11 may include: according to the identifier of the at least one descriptor, respectively determining a first state of each descriptor, where the first state includes a registered state or an unregistered state; when the first state of each descriptor is the registered state, determining that the first processing instruction is executable, in other words, when all the descriptors included in the operand are registered, the first processing instruction is executable.

For example, the operand of the first processing instruction includes identifiers (TR3 and TR4) of two descriptors. According to the identifiers TR3 and TR4 of the descriptors, the state of TR3 and TR4 (registered or unregistered) can be determined. When the state of at least one of TR3 and TR4 is the unregistered state, the first processing instruction cannot be executed, at this time, the descriptor registration instruction can be called to register TR3 and/or TR4, and the state of TR3 and/or TR4 may be changed to the registered state after the TR3 and/or TR4 is successfully registered. When both the states of the descriptors TR3 and TR4 are the registered state, the first processing instruction is executable.

In a possible implementation method, the first state of the descriptor can be represented in a plurality of ways. For example, a first flag bit may be set in the descriptor to indicate the first state, for example, the identifier of the descriptor is stored in the register, the highest bit of the register is taken as the first flag bit, and the relevant information of the descriptor is stored starting from the second highest bit. A state correspondence table may be set, and the first state of the descriptor may be written into the state correspondence table. Those skilled in the art can set the way of representing the first state according to actual needs, which is not limited in the present disclosure.

In this way, whether the instruction is executable may be determined according to the first state of the descriptor, so that the complexity of the processor determining whether the instruction is executable may be reduced. Take a release operation as an example, when the descriptor is about to be released, only the state needs to be changed to complete the operation, and there is no need to clear the related storage area of the descriptor; when other descriptors need to use the storage area, it is only needed to cover the area. Take the operation as an example, firstly, the state of the operator can be directly determined; when the operator is invalid, the first state can be used to determine that the instruction cannot be executed, so that the instruction will be blocked without further determination.

In a possible implementation method, the operand of the first processing instruction may include an identifier of at least one descriptor. The step S11 may include: according to the identifier of the at least one descriptor, respectively determining a second state of each descriptor, where the second state includes an operable state or an inoperable state; when the second state of each descriptor is the operable state, determining that the first processing instruction is executable.

For example, in the case where the pre-order instruction of the first processing instruction is performing operation (such as writing or reading) on the descriptor, the current state of the descriptor is an inoperable state, at this time, the first processing instruction cannot be executed, and the first processing instruction maybe be blocked or cached. Conversely, when there is no pre-order instruction performing the operation on the descriptor, the current state of the descriptor may be set to an operable state, at this time, the first processing instruction can be executed.

In a possible implementation method, when there are more than two pre-order instructions performing the operation on the descriptor, the operable state is represented by "0", and the inoperable state is represented by "1". After all the pre-order instructions have performed operations, the flag bit of the second state is "0"; if not all the pre-order instructions have performed operations, the flag bit of the second state is "1". The operable state may be also represented by "0", and the inoperable state may be represented by "N", where N is the count of pre-order instructions performing operations on the descriptor, when each pre-order instruction has performed the operation, the count is updated to N-, until the value of the flag bit is 0, and the second state of the descriptor is the operable state. The present disclosure does not limit the specific representation of the state.

In a possible implementation method, the second state of the descriptor includes an operable state or an inoperable state, where the second state may be represented in many ways. For example, a second flag bit may be set in the descriptor to indicate the second state, or the second state of the descriptor may be written into the state correspondence table. The state correspondence table may be stored in a register, and the determination of the first state and the second state in the state correspondence table may be realized by hardware. Those skilled in the art can set the way of representing the second state according to actual needs, which is not limited in the present disclosure.

In this way, whether the instruction is executable may be determined according to the second state of the descriptor, which reduces the complexity of determining whether the instruction is executable by the processor. Take the operation as an example, whether the second state of the descriptor involved in the instruction is an operable state may be determined directly, while there is no need to obtain the base address and operation range of the operand, thereby obtaining the actual operation area, and then whether there is an overlap between the areas may be determined, finally, whether the instruction is in an operable state will be determined.

In a possible implementation method, when the first processing instruction is determined to be executable in the step S11, in the step S12, data processing corresponding to the first processing instruction may be executed according to the identifier of the descriptor. In other words, when the first processing instruction is executable, the data address of the tensor data indicated by the descriptor may be obtained by computing according to the identifier of the descriptor, and then the tensor data is read from the data address, and the data processing corresponding to the first processing instruction will be executed.

In a possible implementation method, according to the identifier of the descriptor, the data address of the tensor data indicated by the descriptor may be directly obtained. For example, when the content of the descriptor is the data address of the tensor data, there is no need to make computation, the data address may be read directly from the descriptor storage space, the tensor data may be read from the data address, and the data processing corresponding to the first processing instruction may be executed.

In a possible implementation method, the step S12 may include: according to the identifier of the descriptor, obtaining content of the descriptor from the descriptor storage space; according to the content of the descriptor, determining the data address of the data corresponding to the operand in the data storage space; and according to the data address, executing data processing corresponding to the first processing instruction.

In the embodiment, when the first processing instruction is executable, the content of the descriptor may be obtained from the descriptor storage space according to the identifier of the descriptor in the operand. In other words, according to the identifier of the descriptor, the position of the descriptor in the descriptor storage space may be determined, and then the content of the descriptor may be obtained from the descriptor storage space. In this way, the complexity of software programming may be reduced, and there is no need to know how the data on the hardware side is stored on the software side, and the actual storage address of the hardware may be computed; at the same time, the complexity of the instruction may be reduced, and there is no need to write the parameters (such as the content of the descriptor) used a plurality of times into the instruction each time it is used.

After the content of the descriptor is obtained, the data address of the data corresponding to the operand in the data storage space may be determined according to the content of the descriptor, where the computation of the data address may be realized automatically by hardware or realized by software. When the content of the descriptor is different, the computation method of the data address of the data corresponding to the operand in the data storage space may also be different. The present disclosure does not limit the computation method of the data address.

For example, when the formula (1) is used to represent the content of the descriptor, for any datum point in the tensor data, the data description position is set to $(x_q, y_q)$, and then the data address $PA2_{(x,y)}$ of the data in the data storage space can be determined using the following formula (4):

$$PA2_{(x,y)} = PA\_start + \left(offset\_y + y_q - 1\right) * ori\_x + \left(offset\_x + x_q\right) \quad (4)$$

After the data address of the data corresponding to the operand in the data storage space is obtained, the data processing corresponding to the first processing instruction may be executed according to the data address.

For example, when the first processing instruction is an operation instruction ADD, A, B, if operands A and B include identifiers TR5 and TR6 of the descriptor, respectively, the contents (such as the shape parameter and address parameter) of the descriptor TR5 and the descriptor TR6 may be obtained from the descriptor storage space according to TR5 and TR6; then, according to the contents of the descriptor TR5 and the descriptor TR6, the data addresses of data A and B are computed, respectively, where the address 1 of data A in the data storage space is ADDR64-ADDR127, and the address 2 of data B in the data storage space is ADDR1023-ADDR1087; and then, data is read from address 1 and address 2 to perform addition (ADD) operation, and finally, the operation result (A+B) is obtained.

In a possible implementation method, the data processing method further includes: when the first processing instruction is a descriptor registration instruction, obtaining the registration parameters of the descriptor in the first processing instruction, where the registration parameters include at least one of the identifier of the descriptor, the shape of the tensor, and the content of the tensor data indicated by the descriptor; determining whether the first processing instruction is executable according to the registration parameters of the descriptor; and executing the first processing instruction when he first processing instruction is executable.

In the embodiment, when the first processing instruction is the descriptor registration instruction, the registration parameters of the descriptor may be obtained from the first processing instruction, where the registration parameters include at least one of the identifier of the descriptor, the shape of the tensor, and the content of the tensor data indicated by the descriptor; whether the first processing instruction is executable may be determined according to the registration parameters of the descriptor, in other words, whether the descriptor can be registered may be determined according to the registration parameters of the descriptor, where when the identifier of the descriptor is occupied or the descriptor storage space is insufficient, the descriptor cannot be successfully registered. It should be understood that those skilled in the art can set the determination of the registration parameters according to the actual situation, which is not limited in the present disclosure.

In a possible implementation method, the determining whether the first processing instruction is executable according to the registration parameters of the descriptor may include: determining that the first processing instruction is executable when at least one of three conditions is satisfied: the identifier of the descriptor is not occupied, the first storage area for storing the content of the descriptor is not occupied, and the second storage area for storing the tensor data indicated by the descriptor is not occupied. In other words, the first processing instruction is executable when the registration parameters satisfy at least one of three conditions: the identifier of the descriptor is not occupied, the first storage area is not occupied, and the second storage area is not occupied.

When the first processing instruction is executable, the first processing instruction (the descriptor registration instruction) is executed. For example, the first storage area in the descriptor storage space for storing the content of the descriptor and the second storage area in the descriptor storage space for storing the content of the tensor data indicated by the descriptor may be determined firstly; then, the content of the descriptor may be determined according to the registration parameters and the second storage area, in other words, the correspondence between the descriptor and the second storage area may be established; and then, the content of the descriptor is stored in the first storage area to complete the registration of the descriptor.

In a possible implementation method, the data processing method further includes: when the first processing instruction is a descriptor release instruction, determining whether there is a fourth processing instruction that has not been executed according to the identifier of the descriptor in the first processing instruction, where the fourth processing instruction is a processing instruction in the instruction queue and the operand thereof includes the identifier of the descriptor; executing the first processing instruction when there is no fourth processing instruction that has not been executed.

In the embodiment, when the first processing instruction is the descriptor release instruction, it can be determined according to the identifier of the descriptor whether there is a fourth processing instruction whose operand includes the identifier of the descriptor in the instruction queue may be determined according to the identifier of the descriptor. When there is a fourth processing instruction that has not been executed, the first processing instruction cannot be executed; when there is no fourth processing instruction that has not been executed, the first processing instruction (the descriptor release instruction) will be executed, at this time, the storage area of the descriptor in the descriptor storage space and the storage area of the data indicated by the descriptor in the data storage space may be released respectively.

For example, when the first processing instruction is a descriptor release instruction, and the identifier of the released descriptor is TR7, a fourth processing instruction whose operand includes TR7 in the instruction queue may be looked up firstly. For example, when there are two fourth processing instructions in the instruction queue: an operation instruction and a reading instruction for TR7, whether the two fourth processing instructions (the operation instruction and the reading instruction for TR7) have been executed may be determined, where when both the two fourth processing instructions have not been executed, the first processing instruction (the descriptor release instruction) cannot be executed; when both the two fourth processing instructions have been executed, the first processing instruction is executable. After that, the first processing instruction (the descriptor release instruction) is executed to release the storage area of TR7 in the descriptor storage space and the storage area of the data indicated by TR6 in the data storage space, respectively.

In a possible implementation method, when the first processing instruction is the descriptor release instruction, whether the first state of the descriptor is registered state may be determined according to the identifier of the descriptor. When the first state of the descriptor is registered state, the first processing instruction (the descriptor release instruction) is executable; when the first state of the descriptor is not registered state, the first processing instruction (the descriptor release instruction) cannot be executed. In other words, when the descriptor in the operand is in the registered state, the descriptor release instruction can be executed.

In a possible implementation method, the data processing method further includes: when the first processing instruction is non-executable, blocking or caching the first processing instruction. In other words, when the first processing instruction is non-executable, the first processing instruction may be blocked, and the execution of the first processing instruction and other subsequent instructions may be suspended until the second processing instruction is executed completely, and then the first processing instruction and other subsequent instructions may be executed; or the first processing instruction may be cached, the first processing instruction may be stored in a preset caching space without affecting the execution of other instructions, after the execution of the second processing instruction is completed, the first processing instruction in the caching space will be executed. The present disclosure does not limit the processing method when the first processing instruction is non-executable.

According to the data processing method provided in the embodiment of the present disclosure, when the operand of the decoded processing instruction includes the identifier of the descriptor, whether the instruction is executable may be determined according to the identifier of the descriptor, and when the instruction is executable, the data processing corresponding to the instruction may be executed according to the identifier of the descriptor, therefore, the complexity of the processor to determine whether the instruction is executable may be reduced, and the processing efficiency of the processor may be improved.

It should be noted that although the above-mentioned embodiment is used as an example to introduce the data processing method as described above, those skilled in the art can understand that the present disclosure should not be limited thereto. In fact, users can flexibly set each step according to personal preference and/or actual application scenarios, as long as it conforms to the technical solution of the present disclosure.

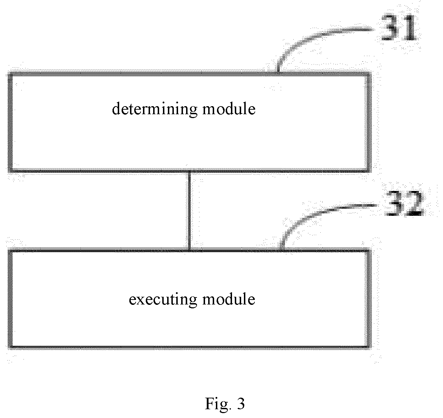

Fig. 3 shows a block diagram of a data processing apparatus according to an embodiment of the present disclosure. As shown in Fig. 3, the data processing apparatus may include:

a determining module 31 configured to determine, when an operand of a decoded first processing instruction includes an identifier of a descriptor, whether the first processing instruction is executable according to the identifier of the descriptor, where the descriptor is used to indicate a shape of a tensor; and
an executing module 32 configured to execute, when the first processing instruction is executable, data processing corresponding to the first processing instruction according to the identifier of the descriptor.

In a possible implementation method, the executing module 32 includes: a content obtaining sub-module configured to obtain the content of the descriptor from the descriptor storage space according to the identifier of the descriptor; an address determining sub-module configured to determine the data address of the data corresponding to the operand in the data storage space according to the content of the descriptor; and a first executing sub-module configured to execute data processing corresponding to the first processing instruction according to the data address.

In a possible implementation method, the determining module 31 includes: an instruction determining sub-module configured to determine whether there is a second processing instruction that has not been executed completely according to the identifier of the descriptor, where the second processing instruction includes a processing instruction that is prior to the first processing instruction in the instruction queue and has the identifier of the descriptor in the operand thereof; and a first execution determining sub-module configured to determine that the first processing instruction is executable when there is no the second processing instruction.

In a possible implementation method, at least one of the first processing instruction and the second processing instruction includes a writing operation for the descriptor.

In a possible implementation method, the operand of the first processing instruction includes an identifier of at least one descriptor, where the determining module 31 includes: a first state determining sub-module configured to determine, according to the identifier of the at least one descriptor, a first state of each descriptor, where the first state includes a registered state or an unregistered state; and a second execution determining sub-module configured to determine, when the first state of each descriptor is the registered state, that the first processing instruction is executable.

In a possible implementation method, the operand of the first processing instruction includes an identifier of at least one descriptor, where the determining module 31 includes: a second state determining sub-module configured to determine, according to the identifier of the at least one descriptor, a second state of each descriptor, where the second state includes an operable state or an inoperable state; and a third execution determining sub-module configured to determine, when the second state of each descriptor is the operable state, that the first processing instruction is executable.

In a possible implementation method, the data processing apparatus further includes: a release determining module configured to determine, when the first processing instruction is a descriptor release instruction, whether there is a fourth processing instruction that has not been executed according to the identifier of the descriptor in the first processing instruction, where the fourth processing instruction is a processing instruction in the instruction queue and the operand thereof includes the identifier of the descriptor; and a release executing module configured to execute the first processing instruction when there is no fourth processing instruction that has not been executed.

In a possible implementation method, the data processing apparatus further includes: a parameter obtaining module configured to obtain, when the first processing instruction is a descriptor registration instruction, the registration parameters of the descriptor in the first processing instruction, where the registration parameters include at least one of the identifier of the descriptor, the shape of the tensor, and the content of the tensor data indicated by the descriptor; a registration determining module configured to determine whether the first processing instruction is executable according to the registration parameters of the descriptor; and a registration executing module configured to execute the first processing instruction when the first processing instruction is executable.

In a possible implementation method, the registration determining module includes a condition determining sub-module configured to determine that the first processing instruction is executable when at least one of three conditions is satisfied: the identifier of the descriptor is not occupied, the first storage area for storing the content of the descriptor is not occupied, and the second storage area for storing the tensor data indicated by the descriptor is not occupied.

In a possible implementation method, the data processing apparatus further includes an execution control module configured to block or cache, when the first processing instruction is non-executable, the first processing instruction.

In a possible implementation method, the descriptor is used to indicate the shape of N-dimensional tensor data, where N is an integer greater than or equal to 0. The content of the descriptor includes at least one shape parameter indicating the shape of the tensor data.

In a possible implementation method, the descriptor is also used to indicate the address of N-dimensional tensor data. The content of the descriptor further includes at least one address parameter indicating the address of the tensor data.

In a possible implementation method, the address parameter of the tensor data includes the base address of the datum point of the descriptor in the data storage space of the tensor data. The shape parameter of the tensor data includes at least one of the followings: a size of the data storage space in at least one of N dimensions, a size of the storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the present disclosure further provides an artificial intelligence chip including the above-mentioned data processing apparatus.

The embodiments of the present disclosure have been described above, and the above description is exemplary, not exhaustive, and is not limited to the disclosed embodiments. Without departing from the scope of the described embodiments, many modifications and changes are obvious to those ordinary skilled in the art. The choice of terms used herein is intended to best explain the principles, practical applications, or improvements to technologies in the market of the embodiments, or to enable other ordinary skilled in the art to understand the embodiments disclosed herein.

**Claims**

1. A data processing method, comprising:

   when an operand of a decoded first processing instruction includes an identifier of a descriptor, determining whether the first processing instruction is executable according to the identifier of the descriptor, where the descriptor indicates a shape of a tensor, and
when the first processing instruction is executable, executing data processing corresponding to the first processing instruction according to the identifier of the descriptor,
wherein, the determining whether the first processing instruction is executable according to the identifier of the descriptor includes:

according to the identifier of the descriptor, determining whether there is a second processing instruction that has not been executed completely, where the second processing instruction includes a processing instruction that is prior to the first processing instruction in an instruction queue and has the identifier of the descriptor in an operand of the second processing instruction, and
when there is no a second processing instruction, determining that the first processing instruction is executable.

2. The data processing method of claim 1, wherein the executing data processing corresponding to the first processing instruction according to the identifier of the descriptor includes:

according to the identifier of the descriptor, obtaining content of the descriptor from a descriptor storage space,
according to the content of the descriptor, determining a data address of data corresponding to the operand in a data storage space, and
according to the data address, executing data processing corresponding to the first processing instruction.

3. The data processing method of claim 1, wherein at least one of the first processing instruction and the second processing instruction includes a writing operation for the descriptor.

4. The data processing method of claim 1, wherein the operand of the first processing instruction includes an identifier of at least one descriptor, wherein the determining whether the first processing instruction is executable according to the identifier of the descriptor includes:

according to the identifier of the at least one descriptor, respectively determining a first state of each descriptor, where the first state includes a registered state or an unregistered state, and
when the first state of each descriptor is the registered state, determining that the first processing instruction is executable.

5. The data processing method of claim 1, wherein the operand of the first processing instruction includes an identifier of at least one descriptor, wherein the determining whether the first processing instruction is executable according to the identifier of the descriptor includes:

according to the identifier of the at least one descriptor, respectively determining a second state of each descriptor, where the second state includes an operable state or an inoperable state, and
when the second state of each descriptor is the operable state, determining that the first processing instruction is executable.

6. The data processing method of claim 1, further comprising:

when the first processing instruction is a descriptor release instruction, determining whether there is a fourth processing instruction that has not been executed completely according to the identifier of the descriptor in the first processing instruction, where the fourth processing instruction is a processing instruction in the instruction queue and an operand of the second processing instruction includes the identifier of the descriptor, and
executing the first processing instruction when there is no fourth processing instruction that has not been executed completely.

7. The data processing method of claim 1, further comprising:

when the first processing instruction is a descriptor registration instruction, obtaining registration parameters of the descriptor in the first processing instruction, where the registration parameters include at least one of the identifier of the descriptor, the shape of the tensor, and content of the tensor data indicated by the descriptor, determining whether the first processing instruction is executable according to the registration parameters of the descriptor, and

executing the first processing instruction when the first processing instruction is executable.

8. The data processing method of claim 7, wherein the determining whether the first processing instruction is executable according to the registration parameters of the descriptor includes:
determining that the first processing instruction is executable when at least one of following three conditions is satisfied: the identifier of the descriptor is not occupied, a first storage area for storing the content of the descriptor is not occupied, and a second storage area for storing the tensor data indicated by the descriptor is not occupied.

9. The data processing method of any one of claims 1-8, further comprising:
when the first processing instruction is non-executable, blocking or caching the first processing instruction.

10. The data processing method of claim 1, wherein the descriptor is used to indicate a shape of N-dimensional tensor data, where N is an integer greater than or equal to 0, wherein

the content of the descriptor includes at least one shape parameter indicating the shape of the tensor data, preferably the shape parameter of the tensor data includes at least one of followings:
a size of the data storage space in at least one of N dimensions, a size of a storage area of the tensor data in at least one of N dimensions, an offset of the storage area in at least one of N dimensions, a position of at least two vertices at diagonal positions in N dimensions relative to the datum point, and a mapping relationship between a data description position of the tensor data indicated by the descriptor and a data address of the tensor data indicated by the descriptor.

11. The data processing method of claim 10, wherein the descriptor is also used to indicate an address of N-dimensional tensor data, where the content of the descriptor further includes at least one address parameter indicating the address of the tensor data,
preferably, the address parameter of the tensor data includes a base address of a datum point of the descriptor in a data storage space of the tensor data.

12. A data processing apparatus, comprising means for carrying out the method of any of claims 1 to 11.

13. An artificial intelligence chip, comprising the data processing apparatus of claim 12.

14. An electronic device, comprising the artificial intelligence chip of claim 13.

**Patentansprüche**

1. Datenverarbeitungsverfahren, umfassend:

wenn ein Operand einer dekodierten ersten Verarbeitungsanweisung eine Kennung eines Deskriptors enthält, Bestimmen, ob die erste Verarbeitungsanweisung gemäß der Kennung des Deskriptors ausführbar ist, wobei der Deskriptor eine Form eines Tensors angibt, und
wenn die erste Verarbeitungsanweisung ausführbar ist, Ausführen einer Datenverarbeitung entsprechend der ersten Verarbeitungsanweisung gemäß der Kennung des Deskriptors,
wobei das Bestimmen, ob die erste Verarbeitungsanweisung gemäß der Kennung des Deskriptors ausführbar ist, Folgendes beinhaltet:

gemäß der Kennung des Deskriptors, Bestimmen, ob es eine zweite Verarbeitungsanweisung gibt, die nicht vollständig ausgeführt wurde, wobei die zweite Verarbeitungsanweisung eine Verarbeitungsanweisung beinhaltet, die in einer Anweisungswarteschlange vor der ersten Verarbeitungsanweisung ist und die Kennung des Deskriptors in einem Operanden der zweiten Verarbeitungsanweisung aufweist, und
wenn es keine zweite Verarbeitungsanweisung gibt, Bestimmen, dass die erste Verarbeitungsanweisung ausführbar ist.

2. Datenverarbeitungsverfahren nach Anspruch 1, wobei das Ausführen der Datenverarbeitung entsprechend der ersten Verarbeitungsanweisung gemäß der Kennung des Deskriptors Folgendes beinhaltet:

gemäß der Kennung des Deskriptors, Erlangen von Inhalt des Deskriptors aus einem Deskriptor-Speicherplatz,

gemäß dem Inhalt des Deskriptors, Bestimmen einer Datenadresse von Daten entsprechend dem Operanden in einem Datenspeicherraum, und
gemäß der Datenadresse, Ausführen einer Datenverarbeitung entsprechend der ersten Verarbeitungsanweisung.

3. Datenverarbeitungsverfahren nach Anspruch 1, wobei mindestens eine von der ersten Verarbeitungsanweisung und der zweiten Verarbeitungsanweisung eine Schreiboperation für den Deskriptor beinhaltet.

4. Datenverarbeitungsverfahren nach Anspruch 1, wobei der Operand der ersten Verarbeitungsanweisung eine Kennung mindestens eines Deskriptors beinhaltet, wobei das Bestimmen, ob die erste Verarbeitungsanweisung gemäß der Kennung des Deskriptors ausführbar ist, Folgendes beinhaltet:

gemäß der Kennung des mindestens einen Deskriptors, ein jeweiliges Bestimmen eines ersten Zustands von jedem Deskriptor, wobei der erste Zustand einen registrierten Zustand oder einen nicht registrierten Zustand beinhaltet, und
wenn der erste Zustand von jedem Deskriptor der registrierte Zustand ist, Bestimmen, dass die erste Verarbeitungsanweisung ausführbar ist.

5. Datenverarbeitungsverfahren nach Anspruch 1, wobei der Operand der ersten Verarbeitungsanweisung eine Kennung mindestens eines Deskriptors beinhaltet, wobei das Bestimmen, ob die erste Verarbeitungsanweisung gemäß der Kennung des Deskriptors ausführbar ist, Folgendes beinhaltet:

gemäß der Kennung des mindestens einen Deskriptors, ein jeweiliges Bestimmen eines zweiten Zustands von jedem Deskriptor, wobei der zweite Zustand einen betriebsfähigen Zustand oder einen nicht betriebsfähigen Zustand beinhaltet, und
wenn der zweite Zustand von jedem Deskriptor der betriebsbereite Zustand ist, Bestimmen, dass die erste Verarbeitungsanweisung ausführbar ist.

6. Datenverarbeitungsverfahren nach Anspruch 1, ferner umfassend:

wenn die erste Verarbeitungsanweisung eine Deskriptor-Freigabeanweisung ist, Bestimmen, ob es eine vierte Verarbeitungsanweisung gibt, die nicht vollständig ausgeführt wurde, gemäß der Kennung des Deskriptors in der ersten Verarbeitungsanweisung, wobei die vierte Verarbeitungsanweisung eine Verarbeitungsanweisung in der Anweisungswarteschlange ist und ein Operand der zweiten Verarbeitungsanweisung die Kennung des Deskriptors beinhaltet, und
Ausführen der ersten Verarbeitungsanweisung, wenn es keine vierte Verarbeitungsanweisung gibt, die nicht vollständig ausgeführt wurde.

7. Datenverarbeitungsverfahren nach Anspruch 1, ferner umfassend:

wenn die erste Verarbeitungsanweisung eine Deskriptor-Registrierungsanweisung ist, Erlangen von Registrierungsparametern des Deskriptors in der ersten Verarbeitungsanweisung, wobei die Registrierungsparameter mindestens eines von der Kennung des Deskriptors, der Form des Tensors und dem Inhalt der Tensordaten, die durch den Deskriptor angegeben werden, beinhalten,
Bestimmen, ob die erste Verarbeitungsanweisung gemäß den Registrierungsparametern des Deskriptors ausführbar ist, und
Ausführen der ersten Verarbeitungsanweisung, wenn die erste Verarbeitungsanweisung ausführbar ist.

8. Datenverarbeitungsverfahren nach Anspruch 7, wobei das Bestimmen, ob die erste Verarbeitungsanweisung gemäß den Registrierungsparametern des Deskriptors ausführbar ist, Folgendes beinhaltet:
Bestimmen, dass die erste Verarbeitungsanweisung ausführbar ist, wenn mindestens eine der folgenden drei Bedingungen erfüllt ist: die Kennung des Deskriptors ist nicht belegt, ein erster Speicherbereich zum Speichern des Inhalts des Deskriptors ist nicht belegt, und ein zweiter Speicherbereich zum Speichern der durch den Deskriptor angegebenen Tensordaten ist nicht belegt.

9. Datenverarbeitungsverfahren nach einem der Ansprüche 1-8, ferner umfassend:
wenn die erste Verarbeitungsanweisung nicht ausführbar ist, Blockieren oder Zwischenspeichern der ersten Verarbeitungsanweisung.

**10.** Datenverarbeitungsverfahren nach Anspruch 1, wobei der Deskriptor verwendet wird, um eine Form von N-dimensionalen Tensordaten anzugeben, wobei N eine ganze Zahl größer als oder gleich 0 ist, wobei

der Inhalt des Deskriptors mindestens einen Formparameter beinhaltet, der die Form der Tensordaten angibt, der Formparameter der Tensordaten vorzugsweise mindestens eines von Folgenden beinhaltet: eine Größe des Datenspeicherraums in mindestens einer von N Dimensionen, eine Größe eines Speicherbereichs der Tensordaten in mindestens einer von N Dimensionen, einen Versatz des Speicherbereichs in mindestens einer von N Dimensionen, eine Position von mindestens zwei Scheitelpunkten an diagonalen Positionen in N Dimensionen in Bezug auf den Bezugspunkt und eine Mapping-Beziehung zwischen einer Datenbeschreibungsposition der Tensordaten, die durch den Deskriptor angegeben wird, und einer Datenadresse der Tensordaten, die durch den Deskriptor angegeben wird.

**11.** Datenverarbeitungsverfahren nach Anspruch 10, wobei der Deskriptor auch verwendet wird, um eine Adresse von N-dimensionalen Tensordaten anzugeben, wobei der Inhalt des Deskriptors ferner mindestens einen Adressparameter beinhaltet, der die Adresse der Tensordaten angibt, wobei der Adressparameter der Tensordaten vorzugsweise eine Basisadresse eines Bezugspunkts des Deskriptors in einem Datenspeicherraum der Tensordaten beinhaltet.

**12.** Datenverarbeitungsvorrichtung, umfassend Einrichtungen zum Durchführen des Verfahrens nach einem der Ansprüche 1 bis 11.

**13.** Chip künstlicher Intelligenz, umfassend die Datenverarbeitungsvorrichtung nach Anspruch 12.

**14.** Elektronische Vorrichtung, umfassend den Chip künstlicher Intelligenz nach Anspruch 13.

**Revendications**

**1.** Procédé de traitement de données, comprenant :

lorsqu'un opérande d'une première instruction de traitement décodée comprend un identifiant d'un descripteur, la détermination pour savoir si la première instruction de traitement est exécutable selon l'identifiant du descripteur, où le descripteur indique une forme d'un tenseur, et lorsque la première instruction de traitement est exécutable, l'exécution du traitement de données correspondant à la première instruction de traitement selon l'identifiant du descripteur, ladite détermination pour savoir si la première instruction de traitement est exécutable selon l'identifiant du descripteur comprenant :

selon l'identifiant du descripteur, la détermination pour savoir si une seconde instruction de traitement qui n'a pas été complètement exécutée existe, où la seconde instruction de traitement comprend une instruction de traitement qui est antérieure à la première instruction de traitement dans une file d'attente d'instructions et possède l'identifiant du descripteur dans un opérande de la seconde instruction de traitement, et lorsqu'aucune seconde instruction de traitement n'existe, la détermination que la première instruction de traitement est exécutable.

**2.** Procédé de traitement de données selon la revendication 1, ladite exécution du traitement de données correspondant à la première instruction de traitement selon l'identifiant du descripteur comprenant :

selon l'identifiant du descripteur, l'obtention d'un contenu du descripteur à partir d'un espace de stockage de descripteurs, selon le contenu du descripteur, la détermination d'une adresse de données de données correspondant à l'opérande dans un espace de stockage de données, et selon l'adresse de données, l'exécution d'un traitement de données correspondant à la première instruction de traitement.

**3.** Procédé de traitement de données selon la revendication 1, au moins l'une de la première instruction de traitement et de la seconde instruction de traitement comprenant une opération d'écriture pour le descripteur.

**4.** Procédé de traitement de données selon la revendication 1, ledit opérande de la première instruction de traitement comprenant un identifiant d'au moins un descripteur, ladite détermination pour savoir si la première instruction de traitement est exécutable selon l'identifiant du descripteur comprenant :

selon l'identifiant de l'au moins un descripteur, la détermination respective d'un premier état de chaque descripteur, où le premier état comprend un état enregistré ou un état non enregistré, et
lorsque le premier état de chaque descripteur est l'état enregistré, la détermination que la première instruction de traitement est exécutable.

**5.** Procédé de traitement de données selon la revendication 1, ledit opérande de la première instruction de traitement comprenant un identifiant d'au moins un descripteur, ladite détermination pour savoir si la première instruction de traitement est exécutable selon l'identifiant du descripteur comprenant :

selon l'identifiant de l'au moins un descripteur, la détermination respective d'un second état de chaque descripteur, où le second état comprend un état fonctionnel ou un état non fonctionnel, et
lorsque le second état de chaque descripteur est l'état fonctionnel, la détermination que la première instruction de traitement est exécutable.

**6.** Procédé de traitement de données selon la revendication 1, comprenant en outre :

lorsque la première instruction de traitement est une instruction de libération de descripteur, la détermination pour savoir si une quatrième instruction de traitement qui n'a pas été complètement exécutée selon l'identificateur du descripteur dans la première instruction de traitement existe, où la quatrième instruction de traitement est une instruction de traitement dans la file d'attente d'instructions et un opérande de la seconde instruction de traitement comprend l'identifiant du descripteur, et
l'exécution de la première instruction de traitement lorsqu'aucune quatrième instruction de traitement qui n'a pas été complètement exécutée n'existe.

**7.** Procédé de traitement de données selon la revendication 1, comprenant en outre :

lorsque la première instruction de traitement est une instruction d'enregistrement de descripteur, l'obtention des paramètres d'enregistrement du descripteur dans la première instruction de traitement, où les paramètres d'enregistrement comprennent au moins l'un de l'identifiant du descripteur, de la forme du tenseur et du contenu des données tensorielles indiquées par le descripteur,
la détermination pour savoir si la première instruction de traitement est exécutable selon les paramètres d'enregistrement du descripteur, et
l'exécution de la première instruction de traitement lorsque la première instruction de traitement est exécutable.

**8.** Procédé de traitement de données selon la revendication 7, ladite détermination pour savoir si la première instruction de traitement est exécutable selon les paramètres d'enregistrement du descripteur comprenant :
la détermination que la première instruction de traitement est exécutable lorsqu'au moins l'une des trois conditions suivantes est satisfaite : l'identifiant du descripteur n'est pas occupé, une première zone de stockage destinée à stocker le contenu du descripteur n'est pas occupée, et une seconde zone de stockage destinée à stocker les données tensorielles indiquées par le descripteur n'est pas occupée.

**9.** Procédé de traitement de données selon l'une quelconque des revendications 1 à 8, comprenant en outre :
lorsque la première instruction de traitement est non exécutable, le blocage ou la mise en mémoire cache de la première instruction de traitement.

**10.** Procédé de traitement de données selon la revendication 1, ledit descripteur étant utilisé pour indiquer une forme de données tensorielles à N dimensions, N étant un entier supérieur ou égal à 0,

ledit contenu du descripteur comprenant au moins un paramètre de forme indiquant la forme des données tensorielles,
de préférence, le paramètre de forme des données tensorielles comprenant au moins l'un des suivants :
une taille de l'espace de stockage de données dans au moins l'une des N dimensions, une taille d'une zone de stockage des données tensorielles dans au moins l'une des N dimensions, un décalage de la zone de stockage dans au moins l'une des N dimensions, une position d'au moins deux sommets au niveau de positions diagonales dans N dimensions par rapport au point de référence, et une relation de mise en correspondance entre une position de description de données des données tensorielles indiquées par le descripteur et une adresse de données des données tensorielles indiquées par le descripteur.

11. Procédé de traitement de données selon la revendication 10, ledit descripteur étant également utilisé pour indiquer une adresse des données tensorielles à N dimensions, où le contenu du descripteur comprenant en outre au moins un paramètre d'adresse indiquant l'adresse des données tensorielles,
de préférence, ledit paramètre d'adresse des données tensorielles comprenant une adresse de base d'un point de référence du descripteur dans un espace de stockage de données des données tensorielles.

12. Appareil de traitement de données, comprenant un moyen pour effectuer le procédé selon l'une quelconque des revendications 1 à 11.

13. Puce d'intelligence artificielle, comprenant l'appareil de traitement de données selon la revendication 12.

14. Dispositif électronique, comprenant la puce d'intelligence artificielle selon la revendication 13.

S11

when an operand of a decoded first processing instruction includes an identifier of a descriptor, determining whether the first processing instruction is executable according to the identifier of the descriptor

S12

when the first processing instruction is executable, executing data processing corresponding to the first processing instruction according to the identifier of the descriptor

Fig. 1

Fig. 2

Fig. 3

storage device 390

board card

storage unit 393 • • • storage unit 393

bus

control device 392

MCU

chip 389

chip 389

interface apparatus 391

external apparatus

Fig. 4

**REFERENCES CITED IN THE DESCRIPTION**

**Patent documents cited in the description**

- WO 2018217360 A